# EUROPÄISCHE PATENTSCHRIFT

(11) **EP 2 615 375 B1**
(45) Veröffentlichungstag und Bekanntmachung des Hinweises auf die Patenterteilung: **26.10.2016**
(21) Anmeldenummer: 12198539.4
(22) Anmeldetag: 20.12.2012
(51) Int. Cl.: F24C 7/08, F24C 14/02

(54) **Gargerät mit Sensor für Garraum**
Cooking device with sensor for the cooking chamber
Appareil de cuisson avec capteur pour compartiment de cuisson

(30) Priorität: 11.01.2012 DE 102012200304
(43) Veröffentlichungstag der Anmeldung: 17.07.2013
(73) Patentinhaber: BSH Hausgeräte GmbH, 81739 München (DE); Robert Bosch GmbH, 70442 Stuttgart-Feuerbach (DE)
(72) Erfinder: Bauer, Hans-Jürgen, 83278 Traunstein (DE); Diehl, Lothar, 70839 Gerlingen (DE); Peters, Christoph, 70437 Stuttgart (DE); Pfersch, Harald, 83395 Freilassing (DE)

(56) Entgegenhaltungen:
- EP-A1- 0 031 156
- EP-A1- 0 380 733
- EP-A2- 0 118 014
- EP-A2- 0 528 250
- EP-A2- 0 701 388
- EP-A2- 0 878 709
- EP-A2- 1 906 096
- WO-A1-01/96849
- WO-A1-2006/042708
- WO-A2-2008/086946
- DE-A1- 4 341 632
- DE-A1- 10 222 407
- DE-A1- 10 340 146
- DE-A1-102006 062 057
- DE-A1-102007 008 782
- DE-B3-102010 054 607
- US-A1- 2006 278 215
- ANONYMOUS: 'Oxygen sensor - Wikipedia, the free encyclopedia', [Online] 12 Oktober 2011, XP055174119 Gefunden im Internet: <URL:http://web.archive.org/web/20111012001 119/http://en.wikipedia.org/wiki/Oxygen_sen sor> [gefunden am 2015-03-05]

## Beschreibung

Die Erfindung betrifft ein Gargerät, insbesondere Backofen, mit einem Garraum und mit mindestens einem Sensor zum Erfassen mindestens einer Eigenschaft des Garraums.

Beispielsweise eine Auswertung eines Feuchtigkeitsaufkommens in einem Backofen erlaubt Rückschlüsse auf einen Garzustand eines Gargutes. Bekannte Sensoren zur Messung der Luftfeuchtigkeit sind in ihrem Temperaturbereich eingeschränkt und können daher nicht in einen Garraum eines Backofens eingebaut werden, da dort Temperaturen auftreten, die weitaus höher als die zulässigen Temperaturen für die Sensoren sind, z.B. von bis zu 300°C im Normalbetrieb und von bis zu 500°C in einem Pyrolysebetrieb.

Bekannte Lösungen verwenden daher Sensoren, die außerhalb des Garraums, zum Beispiel in einem Wrasenkanal bzw. in einem Ausblasbereich des Kühllüfters, untergebracht sind. Diese Sensoren befinden sich folglich je nach Temperaturverträglichkeit mehr oder weniger weit entfernt von einem Wrasenauslass des Garraums und somit außerhalb des Garraums. Nachteilig ist bei den bekannten Lösungen, dass dem Wrasen Kühlluft zugesetzt wird und so das Nutzsignal verfälscht wird und zudem bei geschlossenem Wrasenkanal oder bei ausgeschaltetem Kühllüfter kein auswertbares Signal zur Verfügung steht.

Aus dem Stand der Technik sind Sensorelemente zur Erfassung mindestens eines Anteils mindestens einer Gaskomponente eines Gases in einem Messgasraum bekannt, wie beispielsweise in Robert Bosch GmbH: Sensoren im Kraftfahrzeug, 1. Auflage 2010, Seiten 160-165, beschrieben. Bei den Sensorvorrichtungen kann es sich insbesondere um Lambdasonden handeln. Lambdasonden auf Basis eines ionisch leitfähigen Sensorelements, typischerweise aus Zirkoniumdioxid (ZrO₂), vergleichen in der Regel ein Galvanipotenzial einer messgasseitigen Elektrode mit einem Galvanipotenzial einer Referenzelektrode. Die Lambdasonden sind insbesondere für eine Abgasregelung von Ottomotoren, aber auch von Pellet- und Hackschnitzelheizungen und Dieselmotoren bekannt. Eine Lambdasonde ist in diesem Zusammenhang ein Sensor, der in einem Verbrennungsabgas einen Restsauerstoffgehalt misst, um daraus ein Verhältnis von Verbrennungsluft zu Kraftstoff für die weitere Verbrennung beispielsweise so regeln zu können, dass weder ein Kraftstoff- noch ein Luftüberschuss auftritt. Die Lambdasonde ist der Hauptsensor im Regelkreis einer Lambdaregelung zur katalytischen Abgasreinigung. Eine Lambdasonde kann grundsätzlich zwei Messprinzipien verwenden: eine Messung einer Spannung eines Festkörperelektrolyten (Nernstsonde) und eine Messung eines Stroms, aus dem der Sauerstoffpartialdruck über einen großen λ-Bereich berechnet werden kann.

WO 2006/ 042708 A1 offenbart ein Verfahren zur Steuerung eines Garvorgangs bei einem Gargerät mit einem Garraum, mindestens einem Sensor zur Erfassung einer Gaskonzentration in dem Garraum und einer elektrischen Steuerung, die eine Auswerteschaltung mit einem Zeitglied und einen Speicher aufweist und mit dem Sensor in Signalübertragungsverbindung steht, wobei in dem Speicher eine Vielzahl von Referenzwertemengen abgespeichert ist, die jeweils dem zeitlichen Verlauf einer Referenzfunktion von einem Startzeitpunkt t0 bis zu jeweils einem Endezeitpunkt tz eines Garvorgangs entsprechen und denen jeweils Parametersätze für die elektrische Steuerung zugeordnet sind, wobei das Verfahren die folgenden Verfahrensschritte aufweist: aus der während des Garvorgangs erfassten Gaskonzentration wird in der Auswerteschaltung eine Wertemenge erzeugt, die dem zeitlichen Verlauf einer von der Gaskonzentration abhängigen Funktion von dem Startzeitpunkt t0 bis zu einem momentanen Zeitpunkt tn während des Garvorgangs entspricht, in der Auswerteschaltung wird aus den Referenzwertemengen jeweils eine Vergleichswertemenge für den Vergleich zum Zeitpunkt tn erzeugt, die Wertemenge wird in der Auswerteschaltung mit der Vielzahl von Vergleichswertemengen verglichen, eine Mehrzahl von der Wertemenge ähnlichsten Vergleichswertemengen wird mittels der Auswerteschaltung automatisch ausgewählt und aus den zugeordneten Parametersätzen wird über eine Rechenvorschrift der für die elektrische Steuerung bis zu dem nächsten Vergleich zum Zeitpunkt tn+1 verwendete Parametersatz, insbesondere der Garendezeitpunkt, erzeugt und das Verfahren wird automatisch beendet, sobald ein mittels der Auswerteschaltung und in Abhängigkeit der durchgeführten Vergleiche ermittelter Garendezeitpunkt erreicht worden ist.

EP 0 701 388 A2 offenbart einen Backofen für Nahrungsmittel, insbesondere für den Einsatz in gewerblichen oder kollektiven Nahrungsmittelangebots-Anwendungen, aufweisend einen Garraum und Wärmeerzeugungsmittel, die mit einem Lüfter zum Umluftgaren verbunden sein können und die dazu eingerichtet sind, Wärme auf eine Innenseite des Garraums zu übertragen, wobei eine Zirkonoxid-Zelle, die mit einer Seite nach Außen offen ist und mit einer anderen Seite zur Innenseite des Garraums hin offen ist, die ferner in der Lage ist, die relative Konzentration von Sauerstoff in dem Garraum zu messen, und die an einer Wand des Ofens angeordnet ist. Die Anschlüsse der Zirkonoxid-Zelle sind mit einer von der Außenseite des Ofens sichtbaren Anzeigeeinrichtung verbunden, als auch mit einem Steuermittel, das vorzugsweise eine elektronische Mikroprozessoreinheit umfasst und das so angeordnet ist, dass es den Feuchtigkeitsgehalt des Gasgemischs innerhalb des Garraums automatisch festzustellen.

DE 10 2006 062 057 A1 offenbart ein Verfahren zur Bestimmung einer Gasgemischzusammensetzung in mindestens einem Gasraum mittels eines Sensorelements mit einer ersten Elektrode, einer zweiten Elektrode und einem die zwei Elektroden verbindenden Festelektrolyten. Dabei wird in mindestens einem ersten Betriebszustand das mindestens eine Sensorelement zur Bestimmung eines Wasserstoffpartialdruckes in dem Gasgemisch derart betrieben, dass das Sensorelement mit einer ersten Pumpspannung UP1 beaufschlagt wird und dabei ein Pumpstrom IP durch das Sensorelement gemessen wird. Die Pumpspannung UP1 wird dabei derart gewählt, dass ein Anteil eines CO/CO2-Gleichgewichts an dem Pumpenstrom IP kleiner ist als 1/5, vorzugsweise kleiner als 1/10, des Anteils eines H2/H2O-Gleichgewichts an dem Pumpstrom IP. Aus dem Pumpstrom IP kann auf den Partialdruck des Wasserstoffs im Gasgemisch geschlossen werden.

Es ist die Aufgabe der vorliegenden Erfindung, die Nachteile des Standes der Technik zumindest teilweise zu vermeiden und insbesondere eine Möglichkeit zur verbesserten Bestimmung mindestens einer Eigenschaft des Garraums, insbesondere einer Feuchtigkeit, eines Gargeräts bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Gargerät, aufweisend mindestens eine in einen Garraum ragende Lambdasonde zum Erfassen mindestens einer Eigenschaft des Garraums durch Betreiben der Lambdasonde in einem konventionellen Betrieb unterhalb einer Zersetzungsspannung von Wasser, und eine Steuereinrichtung, die mit der Lambdasonde verbunden ist und die zum Steuern und/oder Regeln eines Betriebs des Gargeräts auf Grundlage von Messdaten der mindestens einen Lambdasonde ausgebildet ist, wobei die Steuereinrichtung dazu eingerichtet ist, die Lambdasonde in einem Wechselbetrieb aus dem konventionellem Betrieb und einem Zersetzungsbetriebs zu betreiben, wobei die Lambdasonde in dem Zersetzungsbetriebs mit einer Pumpspannung betreibbar ist, welche höher ist als eine Zersetzungsspannung von Wasser, so dass dabei auf die Lambdasonde auftreffendes Wasser in Wasserstoff und Sauerstoff zersetzt wird, und die Steuereinrichtung dazu eingerichtet ist, einen Feuchtigkeitsgehalt in dem Garraum anhand einer Differenzbetrachtung des Messsignals der Lambdasonde in dem konventionellen Betrieb und in dem Zersetzungsbetrieb der Lambdasonde zu bestimmen.

So können die zugehörigen Messgrößen (Sauerstoffgehalt, Feuchtigkeitsgehalt, Kohlenwasserstoffgehalt, Rußgehalt) unbeeinflusst von einem Kühlluftstrom und von anderen Umgebungsbedingungen ermittelt werden. Querempfindlichkeiten werden reduziert oder sogar vermieden. Dadurch ergeben sich eine Reihe von weiteren Vorteilen wie eine besonders zuverlässige Detektion eines Garzustands eines Garguts, eine Detektion eines Fortschritts einer Maillard-Reaktion, eine Detektion einer Verbrennung in dem Garraum und/oder eine Detektion einer Verschmutzung des Garraums u.v.m. Daraus wiederum können entsprechende Reaktionen oder Maßnahmen eingeleitet werden wie ein Abschalten des Gargeräts und damit ein Beenden des Garvorgangs, eine Steuerung/Regelung eines Wrasenlüfters/einer Wrasenklappe, eine Steuerung/Regelung einer Garraumtemperatur; eine Steuerung/Regelung einer Feuchte im Garraum, eine Steuerung/Regelung einer Pyrolysedauer und einer Pyrolysetemperatur bei Pyrolysegeräten usw.

Zudem lässt sich so eine Feuchtigkeitsmessung auch bei hohen Temperaturen bereitstellen, und zwar direkt im Garraum. Dabei wird ausgenutzt, dass Wasserdampf Luft verdrängt und bei einem üblichen Garvorgang Gargut Wasserdampf erzeugt. Während eines Garvorgangs sinkt aufgrund der Erzeugung des Wasserdampfs also der Sauerstoffgehalt (z.B. messbar in Form eines Sauerstoff-Partialdrucks pO₂), und umgekehrt. Folglich ist es möglich, aus dem Messsignal bzw. den Messdaten der Lambdasonde direkt auf eine Feuchtigkeit zurückzuschließen.

Zur Durchführung des Zersetzungsbetriebs ist die zumindest eine Lambdasonde so eingerichtet, dass sie zumindest zeitweise mit einer (Pump)Spannung Up betreibbar ist, welche höher ist als eine Zersetzungsspannung von Wasser. Im Zersetzungsbetrieb wird auf die Lambdasonde auftreffendes Wasser in Wasserstoff und Sauerstoff zersetzt, und der zusätzliche Sauerstoff kann durch die Lambdasonde erfasst werden, z.B. durch ein höheres Messsignal. Das höhere Messsignal, z.B. ein (Pump-)Strom Ip, kann insbesondere eine Summe aus einem mit dem Luftsauerstoffgehalt korrelierten Messsignal im konventionellen Betrieb, z.B. einem (Pump-)Strom Ig(O₂), und einem zusätzlichen Messsignal aus der Wasserzersetzung im Zersetzungsbetrieb, z.B. einem (Pump-)Strom Ig(H₂O), sein, d.h. Ip = Ig(O₂) + Ig(H₂O) im Zersetzungsbetrieb und Ip = Ig(O₂) im konventionellen Betrieb. Folglich kann das einer Feuchtigkeit zugeordnete Messsignal durch eine Differenzbetrachtung des Messsignals der Lambdasonde im konventionellen Betreib und im Zersetzungsbetrieb bestimmt werden, und daraus der Feuchtigkeitsgehalt direkt bestimmt werden. Dies ergibt den Vorteil, dass die Bestimmung des Feuchtigkeitsgehalts genauer, insbesondere im Wesentlichen unabhängig von einer Anwesenheit von Luft bzw. Sauerstoff verdrängenden Fremdgasen (z.B. Kohlenwasserstoffen), ist.

Durch den Wechselbetrieb des Betriebsmodus aus einem konventionellen Betrieb und einem Zersetzungsbetrieb ergibt sich der Vorteil, dass mittels der Lambdasonde ein Sauerstoffgehalt und ein Feuchtigkeitsgehalt direkt bestimmt werden und das Gargerät entsprechend gesteuert oder geregelt werden kann.

Eine Lambdasonde misst typischerweise einen Sauerstoffgehalt (Sauerstoffkonzentration oder Sauerstoffpartialdruck), dient also als ein Sauerstoffsensor. Die Lambdasonde weist den Vorteil auf, dass sie hochgradig temperaturbeständig ist (typische Betriebstemperatur T = ca. 800 °C). Folglich kann sie ohne eine Gefahr einer thermischen Schädigung auch in einem Garraum bzw. direkt an einen Garraum grenzend eingesetzt werden. Selbst ein Pyrolysebetrieb schädigt die Lambdasonde nicht.

Die mindestens eine Lambdasonde kann mit einer Auswerteschaltung zusammenarbeiten, insbesondere um rohe Messsignale in dazu korrelierte Messdaten umzuwandeln, insbesondere digitale Messdaten. Die Auswerteschaltung kann in die Lambdasonde integriert sein, eine eigenständige Einheit sein oder z.B. als eine Steuereinrichtung des Gargeräts ausgestaltet sein bzw. kann die Steuereinrichtung auch als eine Auswerteinheit der Detektionseinrichtung dienen.

Es ist insbesondere möglich, den aus dem Sauerstoffgehalt bestimmten Feuchtigkeitsgehalt zur Steuerung, Regelung und/oder Überwachung heranzuziehen. Beispielsweise kann aus einem Feuchtigkeitsverlauf ein Garzustand von Gargut erkannt werden und von dem Gargerät entsprechend reagiert werden. Beispielsweise wird Gargut typischerweise zu Beginn eines Garablaufs vergleichsweise viel Wasserdampf abgeben und folgend kontinuierlich weniger Wasserdampf. Aus einem Niveau der bestimmten Feuchtigkeit kann ein Garfortschritt erkannt werden und das Gargerät beispielsweise bei einem Erreichen oder Unterschreiten eines vorbestimmten Feuchtigkeits-Schwellwerts abgeschaltet werden oder eine Temperatur reduziert werden. Es wird ermöglicht, diese Bestimmung des Feuchtigkeitsgehalts im Wesentlichen unabhängig von einem Betrieb eines Wrasenlüfters oder eines Wrasenabzugs durchzuführen.

Es ist noch eine Ausgestaltung, dass das Gargerät dazu eingerichtet ist, einen Feuchtigkeitsgehalt anhand einer (direkten) Korrelation mit dem durch die Lambdasonde gemessenen Sauerstoffgehalt zu bestimmen. Diese Korrelation kann quantitativ beispielsweise experimentell bestimmt sein. Die Messdaten der Lambdasonde können direkt von der Steuereinrichtung übernommen werden oder zuvor in Feuchtigkeitswerte umgerechnet werden. Eine direkte Korrelation zwischen dem Sauerstoffgehalt und der Feuchtigkeit kann beispielsweise durch eine arithmetische Regel oder Rechenvorschrift, durch eine abgespeicherte Tabelle oder durch eine Kennlinie usw. umgesetzt sein.

Der von der Lambdasonde primär gemessene Sauerstoffgehalt (z.B. der SauerstoffPartialdruck pO2) kann jedoch auch ohne eine Umrechnung in einen Feuchtigkeitswert zur Steuerung oder Regelung des Gargeräts verwendet werden.

Es ist beispielsweise eine Weiterbildung, dass das Gargerät dazu eingerichtet ist, ein Öffnen einer Gargerätetür des Garraums anhand eines Anstiegs des Sauerstoffgehalts zu erkennen. Diese Detektion ist möglich, wenn der Sauerstoffgehalt in dem Garraum unterhalb des Normalwertes von 21% liegt. Insbesondere ein plötzlicher, starker Anstieg des Sauerstoffgehalts in dem Garraum lässt auf ein Öffnen einer Garraumtür während eines Garablaufs schließen. Es hat sich gezeigt, dass insbesondere ein Anstieg einer Sauerstoffkonzentration d(XO2)/dt) in einem Bereich von mehr als ca. 4% bis ca. 8%, insbesondere von mehr als ca. 6%, pro Minute ein sicheres Anzeichen für ein Öffnen einer Garraumtür ist. Als Reaktion darauf kann das Gargerät nach einer Erkennung zeitweise oder permanent abgeschaltet werden, um eine Gefahr einer Verbrennung eines Benutzers zu vermeiden, insbesondere auch zur Kindersicherung.

Es ist noch eine weitere Weiterbildung, dass das Gargerät dazu eingerichtet ist, ein Leerheizen des Garraums (Heizen mit leerem Garraum) anhand eines charakteristischen, insbesondere länger andauernden und im Wesentlichen konstanten, Sauerstoffgehalts zu erkennen. Ein solcher Verlauf des Sauerstoffgehalts (z.B. ein Verlauf eines Sauerstoffpartialdrucks pO₂) lässt auf einen leeren Garraum schließen, da dann kein Gargut Wasserdampf abgibt oder verbrennen kann. Als Schutz und zur Vermeidung des Leerlaufs bei Abwesenheit der Benutzer (z.B. bei einer längeren Abwesenheit) kann das Gargerät als eine Reaktion auf das Erkennen des Leerheizens insbesondere abgeschaltet werden.

Es ist ferner eine Weiterbildung, dass das Gargerät dazu eingerichtet ist, ein Überkochen von Flüssigkeit anhand eines Abfalls des Sauerstoffgehalts zu erkennen. Insbesondere ein plötzlicher, starker Abfall der Sauerstoff-Konzentration (insbesondere d(XO₂)/dt von ca. - 5% pro Minute oder noch stärker) lässt auf ein Überkochen einer Flüssigkeit schließen, da dabei eine hohe schlagartige Feuchteentwicklung und folglich Sauerstoffverdrängung bzw. Sauerstoffreduktion auftritt. Das Gargerät kann darauf beispielsweise mit einer automatischen Reduzierung der Garraumtemperatur auf das Erkennen des Überkochens reagieren, um ein weiteres Überkochen zu verhindern. Bei Gargeräten mit zusätzlicher Befeuchtung (bzw. mit einer Fähigkeit zur Dampfgarung) kann eine Dampfentwicklung aufgrund von mittels einer dedizierten Feuchtequelle in den Garraum eingebrachtem Wasser (Wasser, Wasserdampf, Aerosol usw.) kompensiert werden, indem ein kalibriertes Messsignal einer Lambdasonde von einem bewerteten Signal abgezogen wird.

Es ist auch eine Weiterbildung, dass das Gargerät ein Pyrolysegerät ist und dazu eingerichtet ist, einen Pyrolyseablauf anhand eines Sauerstoffgehalts zu steuern oder zu regeln. Insbesondere kann das Gargerät dazu eingerichtet sein, ein Ende einer Pyrolyseverbrennung (organischer Reste während eines Pyrolyseablaufs) anhand eines sich zumindest nicht mehr verringernden Sauerstoffgehalts nach Erreichen einer Solltemperatur zu erkennen. Dies zeigt, dass die Pyrolyse der organischen Reste im Ofen praktisch abgeschlossen ist. Das Ende kann insbesondere dadurch erkannt werden, dass der Sauerstoffpartialdruck wieder ansteigt. Das Erreichen der Solltemperatur verbessert ein sicheres Erkennen eines vollständigen Verbrennens auch hochtemperaturfester organischer Reste. Als Reaktion auf das Erkennen des Endes der Pyrolyseverbrennung kann der Pyrolysevorgang beendet werden, was eine erhebliche Heizenergie einsparen kann.

Es ist außerdem eine Weiterbildung, dass das Gargerät dazu eingerichtet ist, eine korrekte erstmalige Inbetriebnahme des Gargeräts anhand eines Abfalls des Sauerstoffgehalts zu erkennen. Bei der Erstinbetriebnahme des Gargeräts, insbesondere Backofens, entstehen Gase aus Fertigungsrückständen, welche ebenfalls Sauerstoff verdrängen. Folglich kann ein entsprechender Abfall des Sauerstoffgehalts und/oder ein ausreichender Wiederanstieg danach durch die Lambdasonde detektiert werden. Dadurch lässt sich ermitteln, ob eine empfohlene Ausheizung des Gargeräts durch den Anwender bei Erstinbetriebnahme erfolgt ist. Das Gargerät kann so eingerichtet sein, dass es bei einer unkorrekten Inbetriebnahme einen Warnhinweis ausgibt. Alternativ oder zusätzlich kann die Überwachung der Inbetriebnahme auch mittels eines Kohlenwasserstoffsensors durchgeführt werden.

Es ist ferner eine Ausgestaltung, dass das Gargerät dazu eingerichtet ist, die Lambdasonde als einen Temperatursensor einzusetzen. Dabei wird ausgenutzt, dass die Lambdasonde bei ausgeschaltetem (Lambdasonden-)Heizer als ein Temperaturfühler, insbesondere zusätzlicher Temperaturfühler zur Kalibrierung, verwendet werden kann, indem ein gemessener, temperaturabhängiger Innenwiderstand der Lambdasonde in eine Temperatur an der Lambdasonde umgerechnet wird, beispielsweise anhand einer NTC-Kennlinie. Alternativ kann z.B. ein PTC-Widerstand des Heizers ausgewertet werden.

Es ist eine allgemeine Weiterbildung, dass das Gargerät dazu eingerichtet ist, einen normalen Betrieb des Gargeräts aufgrund von Daten der mindestens einen Lambdasonde zu steuern und/oder zu regeln. Unter einem normalen Betrieb wird insbesondere ein Betrieb des Gargeräts verstanden, welches wie vorbestimmt oder wie gewünscht ausgeführt wird. Mittels der mindestens einen Lambdasonde kann der normale Betrieb auf der Grundlage eines besonders genauen und stabilen Messsignals gesteuert und/oder geregelt werden.

Es ist noch eine allgemeine Weiterbildung, dass das Gargerät dazu eingerichtet ist, einen abnormalen Betriebszustand des Gargeräts aufgrund von Daten der mindestens einen Lambdasonde zu erkennen. Ein abnormaler Betriebszustand ist insbesondere ein Betriebszustand, welcher einen normalen Betriebszustand verhindert oder verhindern sollte, z.B. dadurch, dass ein normaler Betriebszustand nicht aktiviert oder erreicht wird oder ein normaler Betriebszustand abgebrochen wird oder werden sollte. Ein abnormaler Betriebszustand ist üblicherweise unerwünscht und kann z.B. auf eine Störung des Betriebsgeräts oder auf ein übergartes Gargut hindeuten.

Ferner lässt sich direkt eine Dampfbeladung bzw. ein Feuchtigkeitsgehalt des Garraums gezielt durch Belüftung und/oder Feuchtigkeitszugabe beeinflussen. Ebenso lässt sich die Konzentration der Atmosphäre (Sauerstoff/Stickstoff-Gemisch) gezielt beeinflussen. Dies kann vorteilhafterweise dann genutzt werden, wenn das Gargut vor einem Kontakt mit den Reaktionspartnern Sauerstoff und/oder Stickstoff, wie sie in der Atmosphäre vorhanden sind, bewahrt werden soll. Ist es andererseits gewünscht, die Reaktionspartner Sauerstoff und/oder Stickstoff in Kontakt mit dem Gargut zu bringen, so kann dies durch Senken des Feuchtigkeitsgehalts bzw. der Dampfkonzentration gezielt erreicht werden.

Es ist noch eine Ausgestaltung, dass das Gargerät dazu eingerichtet ist, einen Garbetrieb mit einem Soll-Feuchtigkeitswert durchzuführen bzw. eine Feuchtigkeit in dem Garraum auf einen Soll-Feuchtigkeitswert einzuregeln. Dadurch wird ein zusätzlicher Backmodus möglich, nämlich ein Garen, insbesondere Backen, bei konstanter Feuchte. Hierbei wird vorzugsweise die Befeuchtung durch Feuchteeintrag, z.B. Feuchteeinspritzung, vorgenommen und/oder der Wrasenlüfter entsprechend gesteuert. Dies kann insbesondere bei einem Anheizen zu einer geringeren Belüftung und während eines Hauptgarablaufs zu einer starken Belüftung führen. Damit wird eine gleichmäßige Krustenbildung erreicht. Vorzugsweise werden Programme mit gezielter Befeuchtung / Krossbacken zeitlich kombiniert. Es ist eine allgemeine Weiterbildung, dass das Gargerät dazu eingerichtet ist, einen Garablauf auf einen Soll-Sauerstoffgehalt zu regeln.

Neben den oben beschriebenen Möglichkeiten, die Lambdasonde in ihrem konventionellen Betrieb zu betreiben, kann die Lambdasonde auch in einem speziell auf eine Feuchtigkeitsdetektion angepassten Betrieb betrieben werden:
Es ist noch eine Weiterbildung, dass das Gargerät dazu eingerichtet ist, mit einem gezielt eingestellten (Soll-)Sauerstoffgehalt (z.B. Sauerstoffpartialdruck) und einem gezielt eingestelltem (Soll-)Feuchtigkeitsgehalt (z.B. Wasserdampfpartialdruck) zu arbeiten. Insbesondere kann das Gargerät dazu eingerichtet sein, einen Sauerstoffgehalt und einen Feuchtigkeitsgehalt in dem Garraum auf entsprechende Sollwerte zu regeln. Dies kann jeweils konstant oder vorzugsweise einer zeitlichen Funktion der Sollwerte folgend geschehen.

Insbesondere mag so bei einem erhöhten Sauerstoffgehalt (z.B. aufgrund einer hohen Wrasenlüfterdrehzahl) durch einen gezielten Feuchtigkeitseintrag (z.B. einer Verdampferschale oder einer Aerosoleinspritzung) der Feuchtigkeitsgehalt separat eingestellt werden.

Es ist auch eine Ausgestaltung, dass mindestens eine Lambdasonde als ein Kohlenwasserstoffsensor ausgestaltet ist. Diese Ausgestaltung nutzt aus, dass bei Bräunungsreaktionen (Maillard-Reaktion o.ä.) und bei Verbrennungsvorgängen im engeren Sinne (Bränden usw.) Kohlenwasserstoffe erzeugt werden und mittels dieser Lambdasonde sicher detektierbar sind. So kann beispielsweise ein Bräunungszustand von Gargut in dem Garraum erkannt werden, und das Gargerät kann entsprechend reagieren, z.B. einen Garablauf steuern und/oder regeln.

Beispielsweise kann das Gargerät dazu eingerichtet sein, bei einem Garprozess bei Erkennen einer für den Garprozess unpassenden Relation zwischen einer Temperatur des Garguts (z.B. einer Gargut-Kerntemperatur) und einem Außenprozessfortschritt (Prozessfortschritt an einer Außenseite oder einem Außenbereich des Garguts) am Gargut die Garraumtemperatur (z.B. Backofen-Temperatur) zu regeln. Wenn beispielsweise die Temperatur zu niedrig ist, jedoch die (außenseitige) Bräunung des Garguts schon weit fortgeschritten ist, kann die Garraumtemperatur heruntergeregelt werden, um ein Verbrennen der Außenseite zu vermeiden. Wenn andererseits die Garguttemperatur schon kurz vor einem Erreichen einer Ziel- oder Soll-Temperatur steht, jedoch der Außenprozessfortschritt an dem Gargut noch nicht die gewünschte Bräunung zeigt, kann entsprechend eine auf eine geeignetere Heizart (z.B. mit einem Einschalten eines Oberhitzeheizkörpers) geschaltet bzw. die Garraumtemperatur hochgeregelt werden. Ebenso kann der Garvorgang entsprechend einer erkannten Konzentration an Kohlenwasserstoffen beendet werden.

Ein solcher Kohlenwasserstoffsensor kann insbesondere auch dazu eingesetzt werden, um ein Erhitzen von Fetten und Ölen zu steuern. Ausgetriebene kurzkettige Kohlenwasserstoffanteile können dabei eine Garraumheizung so steuern, dass ein konstanter Austrag erfolgt oder der Austrag ganz vermieden wird, wenn dies aus Aromagründen notwendig ist. Vorzugsweise kann diese Betriebsart bei einem Frittieren in einem Ofen, insbesondere Backofen, angewendet werden.

Es ist eine zur Kohlenwasserstoffdetektion geeignete Weiterbildung, dass zumindest eine, insbesondere alle, Elektroden der Lambdasonde eine angepasste katalytische Aktivität aufweisen, um Kohlenwasserstoffe zu detektieren. Die Elektroden sind also für Kohlenwasserstoffe katalytisch aktive Elektroden. Während beispielsweise ein herkömmliches Katalysatormaterial Platin ist, kann als Katalysator zur Detektion von Kohlenwasserstoff(en) eine Mischung aus Platin und Gold verwendet werden (PtAu-Katalysator).

Es ist auch eine Ausgestaltung, dass das Gargerät ein Pyrolysegerät ist und dazu eingerichtet ist, einen Pyrolyseablauf anhand eines Kohlenwasserstoffgehalts zu steuern oder zu regeln. Dies kann zusätzlich oder alternativ zu der Steuerung und/oder Regelung anhand des Sauerstoffgehalts geschehen. Eine zusätzliche Verwendung kann eine Ausfallsicherheit erhöhen. Eine alternative Ausgestaltung ermöglicht eine genauere Messung eines Kohlenwasserstoffgehalts.

Insbesondere kann das Gargerät dazu eingerichtet sein, mit Kenntnis des Kohlenwasserstoffgehalts eine Pyrolysetemperatur und das Ende des Pyrolysevorgangs zu steuern oder zu regeln. Es ist eine Weiterbildung, dass bei einem Pyrolysevorgang die Pyrolysetemperatur allmählich erhöht wird und dabei der Kohlenwasserstoffgehalt gemessen wird. Mit der Kenntnis des Kohlenwasserstoffgehalts wird die Pyrolysetemperatur nachgeregelt: Bei sinkendem Kohlenwasserstoffgehalt wird die Pyrolysetemperatur wieder reduziert. Ein Ende einer Pyrolyseverbrennung kann beispielsweise anhand eines sich zumindest nicht mehr erhöhenden Kohlenwasserstoffgehalts erkannt werden. Dies kann auch invers mit dem Sauerstoffgehalt durchgeführt werden.

Die Verwendung einer Lambdasonde mit einem Gargerät erlaubt also den Betrieb aller in einem Gargerät, insbesondere Backofen, bekannten Heizarten, wie Grill, Oberhitze, Unterhitze, Heißluft, Feuchtegaren, Dampfgaren, Mikrowellenbetrieb als auch Reinigungsbetriebe wie Pyrolyse. Weitere Vorteile erwachsen durch das nun messbare Wrasenaufkommen, das gezielt durch Ansteuerung der Wrasenklappe oder des Wrasenlüfters beeinflusst werden kann.

Es ist noch eine Ausgestaltung, dass das Gargerät einen Partikelsensor zum Erfassen eines Rußgehalts bzw. einer Rußkonzentration ein dem Garraum aufweist. Der Partikelsensor kann insbesondere als Brandsensor eingesetzt werden, um einen Ofenbrand o.ä. zu detektieren.

Der Partikelsensor kann insbesondere in dem Garraum untergebracht sein. Der Partikelsensor kann so über einen gesamten Betriebszyklus des Gargeräts den Verlauf der Rußkonzentration in dem Garraum erfassen. Mit einem Partikelsensor kann die Gargerätesteuerung einen Verbrennungsvorgang im Backofen erkennen. Damit kann bei einem Garprozess insbesondere die Garraumtemperatur geregelt und der Garvorgang ggf. gestoppt werden.

Es ist eine Weiterbildung, dass der Partikelsensor auf einem resistiven Funktionsprinzip basiert. Das Messsignal basiert dabei auf einer Widerstandsänderung einer insbesondere interdigitalen Elektrodenstruktur aufgrund einer Rußanlagerung. Aufgrund seiner Funktionsweise ordnet sich der resistive Rußsensor bei den sammelnden Prinzipien ein. Vorzugsweise ist der Partikelsensor als Fingerstruktur in eine Platine integriert und wird mit hoher Spannung betrieben, wie z.B. in DE 10 2006 040 350 A1 offenbart. Damit sind ein einfacher Aufbau und eine hohe Empfindlichkeit gleichzeitig möglich.

Es ist außerdem eine Ausgestaltung, dass mindestens eine Lambdasonde in den Garraum ragt. Dies kann umfassen, dass mindestens eine Lambdasonde mit einer Elektrode den Garraum begrenzt oder dass sich die Lambdasonde ganz oder teilweise in dem Garraum befindet. Dadurch kann die Lambdasonde die Bedingungen (Feuchtigkeit, Sauerstoffanteil usw., wie insbesondere oben beschrieben) des Garraums direkt auch bei einem geschlossenen Wrasenauslass bzw. einem abgeschalteten Wrasenlüfter messen. Zudem ist die Messung unbeeinflusst von einer Kühlluft in einem Wrasenkanal o.ä. und auch von anderen Umgebungsbedingungen, was eine besonders genaue Messung ermöglicht. Eine so angeordnete Lambdasonde kann also ein stetiges, eindeutiges, signifikantes und sehr gut detektierbares Signal erzeugen, wodurch eine stetige Aussage über die Bedingungen im Garraum getroffen werden können.

Es ist noch eine Ausgestaltung, dass mindestens eine Lambdasonde an einer Decke des Garraums, insbesondere oberhalb eines Oberhitzeheizkörpers, angeordnet ist. Denn es hat sich gezeigt, dass Feuchtigkeit in einem Garraum während eines Garbetriebs hochsteigt, so dass eine an der Decke angeordnete Lambdasonde ein besonders starkes Signal mit einem geringen Signal-zu-Rausch-Verhältnis liefern kann. Auch weist eine Anordnung an der Decke den Vorteil auf, dass dort ein vergleichsweise großer Bauraum zum Einbau einer Lambdasonde zur Verfügung steht.

Gemäß der Erfindung weist das Gargerät eine Steuereinrichtung zum Steuern und/oder Regeln eines Betriebs des Gargeräts auf, wobei die Steuereinrichtung mit dem mindestens einen Sensor, insbesondere umfassend mindestens eine Lambdasonde, gekoppelt ist. Dadurch kann ein Betrieb des Gargeräts allgemein auf der Grundlage von Messdaten des mindestens einen Sensors gesteuert oder geregelt werden.

Das Gargerät ist insbesondere ein Haushaltsgargerät. Das Gargerät kann insbesondere einen Ofen aufweisen oder ein Ofen sein, insbesondere ein Backofen.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.1: zeigt als Schnittdarstellung in Frontansicht ein erfindungsgemäßes Gargerät; und
- Fig.2: zeigt eine Auftragung eines Pumpstroms gegen eine Pumpspannung einer Lambdasonde bei einem Zersetzungsbetrieb.

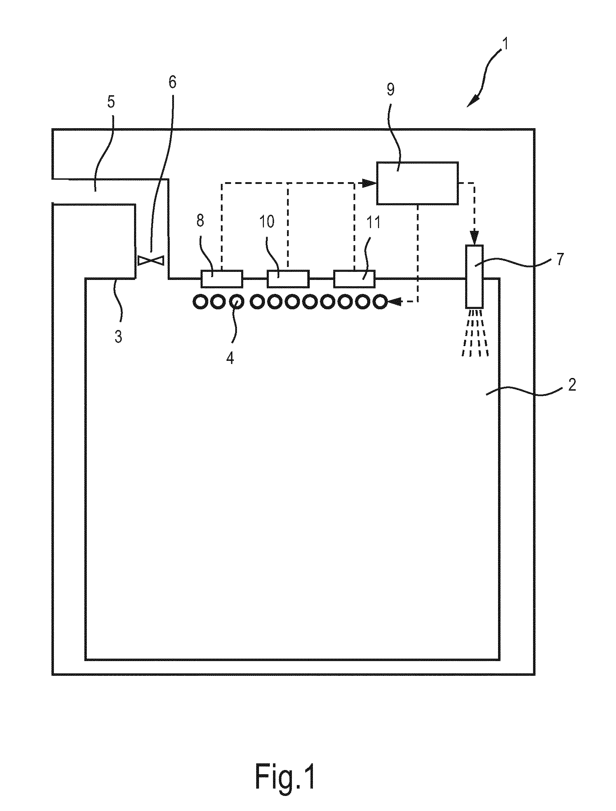

**Fig.1** zeigt als Schnittdarstellung in Frontansicht ein Gargerät in Form eines Backofens 1. Der Backofen 1 weist einen Garraum 2 auf, welcher unter anderem mittels eines nahe einer Decke 3 des Garraums 2 angeordneten Oberhitzeheizkörpers (Grillheizkörpers) 4 beheizbar ist. Der Garraum 2 ist über einen Wrasenkanal 5 mit einer Umgebung verbunden. Der Wrasenkanal 5 weist einen Wrasenlüfter 6 auf, bei dessen Betrieb Luft aus dem Garraum 2 abgezogen wird. Die Stärke des Abzugs kann beispielsweise durch eine Drehzahl des Wrasenlüfters 6 beeinflusst werden. Der Wrasenkanal 5 kann auch eine oder mehrere Wrasenklappen (o. Abb.) zum zumindest teilweise Verschließen des Wrasenkanals 5 aufweisen. Der Backofen 2 weist ferner eine Dampferzeugungseinheit in Form eines Wasseraerosol-Einspritzers 7 auf, mittels welchem ein Feuchtigkeitsgehalt in dem Garraum 2 gezielt gesteigert werden kann.

Der Backofen 1 weist zudem einen Sensor zum Erfassen mindestens einer Eigenschaft des Garraums 2 auf, nämlich eine in den Garraum 2 ragende Lambdasonde 8. Die Lambdasonde 8 ist an der Decke 3 des Garraums 2 angeordnet, und zwar oberhalb des Oberhitzeheizkörpers 4. Dadurch können von einem Gargut (o. Abb.) hochsteigender Wasserdampf, Gase (Kohlenwasserstoffe usw.) oder Ruß detektiert werden, was ein besonders starkes Sensorsignal ermöglicht. Die Lambdasonde 8 ist mit einer zentralen Steuereinrichtung 9 verbunden oder gekoppelt, welche die Messsignale oder Messdaten auswerten kann und für eine Steuerung und/oder Regelung des Backofens 1 nutzen kann, z.B. für eine Steuerung des Oberhitzeheizkörpers 4, des Wrasenlüfters 6 und/oder des Wasseraerosol-Einspritzers 7. Die Lambdasonde 8 kann unabhängig von einer Aktivität des Wrasenlüfters 6 einen Zustand des Garraums 2 erfassen.

Die Lambdasonde 8 kann einen Sauerstoffgehalt in dem Garraum 2 messen, und die Steuereinrichtung 9 kann daraus die bereits einleitend beschriebenen Zustände (Leerheizen, Öffnen einer Backofentür, Überkochen von Flüssigkeit, Erstinbetriebnahme usw.) erkennen und entsprechend darauf reagieren. Die Steuereinrichtung 9 kann ferner mittels des Sauerstoffgehalts in dem Garraum 2 einen Garablauf steuern, insbesondere falls der Sauerstoffgehalt mit einem Feuchtigkeitsgehalt in dem Garraum 2 korreliert wird. Die Korrelation kann beispielsweise von der Steuereinrichtung 9 durch einen Vergleich eines gemessenen Sauerstoffgehalts mit einem dazu abgespeicherten Feuchtigkeitsgehalt durchgeführt werden, z.B. mittels einer Kennlinie.

Mittels der Lambdasonde 8 kann die Steuereinrichtung 9 insbesondere einen Garablauf mit einem Soll-Feuchtigkeitswert durchzuführen, insbesondere auf einen (konstanten oder sich zeitlich ändernden) Soll-Feuchtigkeitswert regeln.

Die Lambdasonde 8 kann außer in dem konventionellen Betrieb in dem Zersetzungsbetrieb betrieben werden und so einen Feuchtigkeitsgehalt in dem Garraum 2 direkt bestimmen. Die Lambdasonde 8 kann dabei insbesondere im Wechselbetrieb von konventionellem Betrieb und Zersetzungsbetrieb betrieben werden, was eine quasi-dauernde, direkte und damit besonders genaue Messung des Sauerstoffgehalts und des Feuchtigkeitsgehalts erlaubt.

Die Lambdasonde 8 ist bei ausgeschalteter Lambdasonden-Heizung auch als ein Temperaturfühler einsetzbar, insbesondere zum Kalibrieren eines dedizierten, in den Garraum 2 geführten Temperatursensors (o. Abb.), z.B. eines Thermoelements.

Der Backofen 1 ist außerdem als ein Pyrolysegerät ausgestaltet. Die Lambdasonde 8 kann die üblichen, bei einem Pyrolyseablauf auftretenden Temperaturen problemlos aushalten. Mittels der Lambdasonde 8 kann die Steuereinrichtung 9 insbesondere den Pyrolyseablauf steuern, insbesondere wie eingangs beschrieben, z.B. eine Pyrolysetemperatur und eine Pyrolysedauer.

Im dem Garraum 2 befinden sich bzw. in den Garraum 2 ragen zusätzlich eine als Kohlenwasserstoffsensor 10 dienende Lambdasonde sowie ein Partikelsensor in Form eines Rußsensors 11. Der Kohlenwasserstoffsensor 10 und der Rußsensor 11 halten ebenfalls die in dem Garraum 2 auftretenden Temperaturen aus.

Der Kohlenwasserstoffsensor 10 ist als eine Lambdasonde ausgestaltet, deren Elektroden katalytisch so arbeiten, dass die Lambdasonde auf Kohlenwasserstoffe anspricht. Der Rußsensor 11 ist bevorzugt ein resistiver Rußsensor mit einer fingerförmigen Elektrodenstruktur.

Das Vorsehen mehrerer Sensoren 8, 10, 11 und das Betreiben einer Lambdasonde 8 in unterschiedlichen Betriebsmodi (konventioneller Betrieb, Zersetzungsbetrieb und/oder Temperaturmessbetrieb) ermöglicht einer besonders vielseitige und genaue Erfassung von Eigenschaft des Garraums (einschließlich der darin befindlichen, ggf. belasteten, Luft) und folglich eine besonders vielseitige und nutzerfreundliche Steuerung und/oder Regelung des Backofens 1. Dies kann insbesondere auch bei hohen Temperaturen im Garraum 2 durchgeführt werden, insbesondere auch bei einem geschlossenen Wrasenkanal 5. Insbesondere können so Querbeeinflussungen oder Querempfindlichkeiten vermindert oder sogar ganz ausgeschlossen werden.

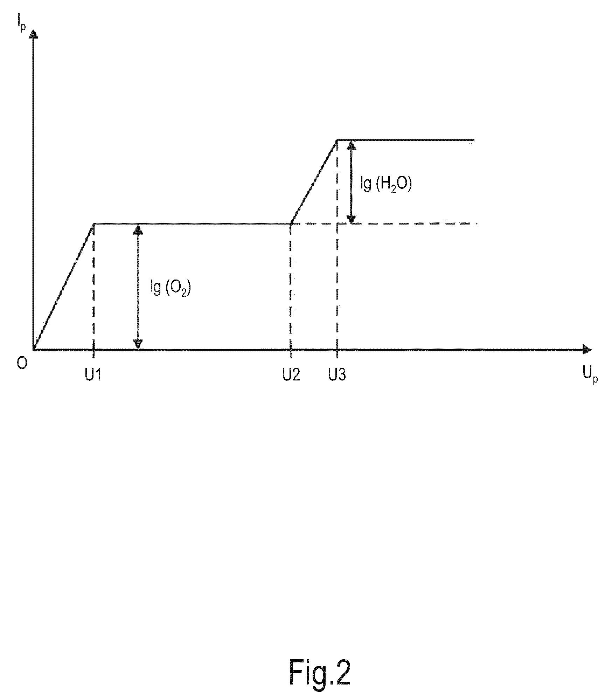

**Fig.2** zeigt eine Auftragung eines Pumpstroms Ip (als Messsignal) gegen eine Pumpspannung Up der Lambdasonde 8 bei einem Wechselbetrieb umfassend einen herkömmlichen Betrieb und einen Zersetzungsbetrieb, und zwar für feuchte Luft mit einem konstanten Sauerstoffgehalt und einem konstanten Feuchtigkeitsgehalt.

Bei einer geringen Pumpspannung bis Up = U1 ist ein Pumpstrom Ip von der Pumpspannung Up abhängig, z.B. linear. Ab Up = U1 bis Up = U2 ist der sich ergebende Pumpstrom Ip = Ig(O₂) zumindest im Wesentlichen konstant für einen konstanten Sauerstoffgehalt. Die Schwelle U2 entspricht einer Spannung, welche gerade unterhalb einer Zersetzungsspannung von Wasser liegt. Der Betrieb der Lambdasonde 8 bis zwischen U1 und U2 kann auch als ein konventioneller Betrieb bezeichnet werden.

Mit einer weiteren Erhöhung der Pumpspannung Up auf Werte oberhalb von U2 liegt die Pumpspannung Up höher als die Zersetzungsspannung von Wasser, so dass sich Wasser an den Elektroden zersetzt und dessen Sauerstoffanteil von der Lambdasonde zusätzlich zu dem Luftsauerstoff detektiert wird. Der Pumpstroms Ip erreicht ab einem Wert Up = U3 > Up = U2 (Zersetzungsbetrieb) einen konstanten Wert Ip = Ig(O₂) + Ig(H₂O).

Der Wasseranteil oder Feuchtigkeitsgehalt in Luft kann folglich durch eine Differenzbetrachtung von Ip = Ig(O₂) + Ig(H₂O) im Zersetzungsbetrieb und Ip = Ig(O₂) im konventionellen Betrieb direkt bestimmt werden und ist folglich auch nicht oder nur geringfügig von einer Verdrängung des Luftsauerstoffs und/oder des Wasserdampfs durch Fremdgase (Kohlenwasserstoffe usw.) beeinflusst.

Allgemein ist es durch die Verwendung mehrerer unterschiedlicher Sensoren möglich, Querbeeinflussungen zu verringern und so eine genauere Messung von Luftbestandteilen in einem Garraum zu erreichen.

Selbstverständlich ist die vorliegende Erfindung nicht auf das gezeigte Ausführungsbeispiel beschränkt.

So mag als Gargerät anstelle oder zusätzlich zu dem Backofen ein Mikrowellengerät, ein Dampfgarer usw. verwendet werden. Als Sensor mag beispielsweise auch nur eine Auswahl der gezeigten Sensoren und/oder Betriebsmodi eingesetzt werden, z.B. die Lambdasonde und der Kohlenwasserstoffsensor, der Kohlenwasserstoffsensor und der Rußsensor, die Lambdasonde und der Rußsensor oder ein einzelner Sensor, z.B. die Lambdasonde im konventionellen Betrieb und/oder im Zersetzungsbetrieb.

### Bezugszeichenliste

- 1: Backofen
- 2: Garraum
- 3: Decke des Garraums
- 4: Oberhitzeheizkörper
- 5: Wrasenkanal
- 6: Wrasenlüfter
- 7: Wasseraerosol-Einspritzer
- 8: Lambdasonde
- 9: Steuereinrichtung
- 10: Kohlenwasserstoffsensor
- 11: Rußsensor
- Ip: Pumpstrom
- Up: Pumpspannung

## Patentansprüche

1. Gargerät (1), aufweisend
- mindestens eine in einen Garraum (2) ragende Lambdasonde (8) zum Erfassen mindestens einer Eigenschaft des Garraums (2) durch Betreiben der Lambdasonde (8) in einem konventionellen Betrieb unterhalb einer Zersetzungsspannung von Wasser, und
- eine Steuereinrichtung (9), die mit der Lambdasonde (8) verbunden ist und die zum Steuern und/oder Regeln eines Betriebs des Gargeräts (1) auf Grundlage von Messdaten der mindestens einen Lambdasonde (8) ausgebildet ist, **dadurch gekennzeichnet, dass**
- die Steuereinrichtung (9) dazu eingerichtet ist, die Lambdasonde (8) in einem Wechselbetrieb aus dem konventionellem Betrieb und einem Zersetzungsbetriebs zu betreiben,
- wobei die Lambdasonde (8) in dem Zersetzungsbetriebs mit einer Pumpspannung (Up) betreibbar ist, welche höher ist als eine Zersetzungsspannung von Wasser, so dass dabei auf die Lambdasonde auftreffendes Wasser in Wasserstoff und Sauerstoff zersetzt wird,
- und die Steuereinrichtung (9) dazu eingerichtet ist, einen Feuchtigkeitsgehalt in dem Garraum (2) anhand einer Differenzbetrachtung des Messsignals der Lambdasonde (8) in dem konventionellen Betrieb und in dem Zersetzungsbetrieb der Lambdasonde (8) zu bestimmen.

2. Gargerät (1) nach Anspruch 1, **dadurch gekennzeichnet, dass** das Gargerät (1) dazu eingerichtet ist, einen Garbetrieb mit einem Soll-Feuchtigkeitswert und einem Soll-Sauerstoffgehalt durchzuführen.

3. Gargerät (1) nach Anspruch 2, **dadurch gekennzeichnet, dass** das Gargerät (1) dazu eingerichtet ist, bei einem erhöhten Sauerstoffgehalt durch einen gezielten Feuchtigkeitseintrag den Feuchtigkeitsgehalt separat einzustellen.

4. Gargerät (1) nach einem der vorhergehenden Ansprüche, **dadurch gekennzeichnet, dass** die Lambdasonde (8) als ein Kohlenwasserstoffsensor ausgestaltet ist.

5. Gargerät (1) nach einem der Ansprüche 1 bis 3, **dadurch gekennzeichnet, dass** das Gargerät (1) zusätzlich einen in den Garraum (2) ragenden Kohlenwasserstoffsensor (10) aufweist, welcher als eine Lambdasonde ausgebildet ist.

6. Gargerät (1) nach einem der Ansprüche 4 oder 5, **dadurch gekennzeichnet, dass** die als Kohlenwasserstoffsensor (10) dienende Lambdasonde für Kohlenwasserstoffe katalytisch aktive Elektroden aufweist.

7. Gargerät (1) nach einem der Ansprüche 4 bis 6, **dadurch gekennzeichnet, dass** das Gargerät (1) dazu eingerichtet ist, anhand einer Detektion von Kohlenwasserstoffen einen Bräunungszustand von Gargut in dem Garraum (2) zu erkennen und einen Garablauf entsprechend zu steuern und/oder zu regeln.

8. Gargerät (1) nach einem der Ansprüche 4 bis 7, **dadurch gekennzeichnet, dass** das Gargerät (1) dazu eingerichtet sein, bei einem Garprozess bei Erkennen einer für den Garprozess unpassenden Relation zwischen einer Temperatur des Garguts und einem Außenprozessfortschritt am Gargut eine Garraumtemperatur zu regeln.

9. Gargerät (1) nach einem der Ansprüche 4 bis 8, **dadurch gekennzeichnet, dass** das Gargerät (1) ein Pyrolysegerät ist und dazu eingerichtet ist, einen Pyrolyseablauf zumindest anhand eines durch die Lambdasonde (8; 10) gemessenen Kohlenwasserstoffgehalts zu steuern und/oder zu regeln.

10. Gargerät (1) nach einem der vorhergehenden Ansprüche, **dadurch gekennzeichnet, dass**
- mittels der Lambdasonde (8) ein Sauerstoffgehalt in dem Garraum (2) messbar ist und
- das Gargerät (1) dazu eingerichtet ist, eine korrekte erstmalige Inbetriebnahme des Garraums (2) anhand eines Abfalls des Sauerstoffgehalts zu erkennen.

11. Gargerät (1) nach einem der vorhergehenden Ansprüche, **dadurch gekennzeichnet, dass** das Gargerät (1) dazu eingerichtet ist, die Lambdasonde (8) bei ausgeschaltetem Heizer als einen Temperatursensor einzusetzen.

12. Gargerät (1) nach einem der vorhergehenden Ansprüche, **dadurch gekennzeichnet, dass**
- das Gargerät (1) einen in den Garraum (2) ragenden Rußsensor (11) aufweist und
- das Gargerät (1) dazu eingerichtet ist, den Rußsensor (11) als Brandsensor zu verwenden.

13. Gargerät (1) nach einem der vorhergehenden Ansprüche, **dadurch gekennzeichnet, dass** mindestens ein Sensor (8, 10, 11) an einer Decke (3) des Garraums (2) oberhalb eines Oberhitzeheizkörpers (4) angeordnet ist.

14. Gargerät (1) nach einem der vorhergehenden Ansprüche, **dadurch gekennzeichnet, dass** das Gargerät (1) ein Backofen ist.

15. Verfahren zum Betreiben eines Gargeräts (1) mit einem Garraum (2) und mit mindestens einer in den Garraum (2) ragenden Lambdasonde (8) zum Erfassen mindestens einer Eigenschaft des Garraums (2) durch Betreiben der Lambdasonde (8) in einem konventionellen Betrieb unterhalb einer Zersetzungsspannung von Wasser, wobei
- die Lambdasonde (8) in einem Wechselbetrieb aus dem konventionellem Betrieb und einem Zersetzungsbetriebs betrieben wird,
- wobei sie in dem Zersetzungsbetriebs mit einer Pumpspannung (Up) betrieben wird, welche höher ist als eine Zersetzungsspannung von Wasser, so dass dabei auf die Lambdasonde auftreffendes Wasser in Wasserstoff und Sauerstoff zersetzt wird,
- ein Feuchtigkeitsgehalt in dem Garraum (2) anhand einer Differenzbetrachtung des Messsignals der Lambdasonde (8) in dem konventionellen Betreib und in dem Zersetzungsbetrieb der Lambdasonde (8) bestimmt wird.

## Claims

1. Cooking appliance (1), having
- at least one lambda probe (8) projecting into a cooking chamber (2) for acquiring at least one property of the cooking chamber (2) by operating the lambda probe (8) in a convention operation below a decomposition voltage of water, and
- a control facility (9), which is connected to the lambda probe (8) and which is embodied to control and/or regulate an operation of the cooking appliance (1) on the basis of measurement data of the at least one lambda probe (8),
**characterised in that**
- the control facility (9) is designed to operate the lambda probe (8) in an alternating operation consisting of the conventional operation and a decomposition operation,
- wherein the lambda probe (8) can be operated in the decomposition operation at a pump voltage (Up), which is higher than a decomposition voltage of water, so that in this instance water impinging on the lambda probe is decomposed into hydrogen and oxygen,
- and the control facility (9) is designed to determine a moisture content in the cooking chamber (2) using a difference evaluation of the measurement signal of the lambda probe (8) in the conventional operation and in the decomposition operation of the lambda probe (8).

2. Cooking appliance (1) according to claim 1, **characterised in that** the cooking appliance (1) is designed to perform a cooking operation with a target moisture value and a target oxygen content.

3. Cooking appliance (1) according to claim 2, **characterised in that** the cooking appliance (1) is designed, in the case of an increased oxygen content, to set the moisture content separately by way of a targeted moisture entry.

4. Cooking appliance (1) according to one of the preceding claims, **characterised in that** the lambda probe (8) is configured as a hydrocarbon sensor.

5. Cooking appliance (1) according to one of claims 1 to 3, **characterised in that** the cooking appliance (1) additionally has a hydrocarbon sensor (10) projecting into the cooking chamber (2), which is embodied as a lambda probe.

6. Cooking appliance (1) according to one of claims 4 or 5, **characterised in that** the lambda probe serving as a hydrocarbon sensor (10) has electrodes which are catalytically active for hydrocarbons.

7. Cooking appliance (1) according to one of claims 4 to 6, **characterised in that** the cooking appliance (1) is designed to detect a browning state of food in the cooking chamber (2) using a detection of hydrocarbons, and to control and/or regulate a cooking sequence accordingly.

8. Cooking appliance (1) according to one of claims 4 to 7, **characterised in that** the cooking appliance (1) is designed to regulate a cooking chamber temperature during a cooking process when a relationship is detected between a temperature of the food and the progress of the outer cooking process on the food which is unsuitable for the cooking process.

9. Cooking appliance (1) according to one of claims 4 to 8, **characterised in that** the cooking appliance (1) is a pyrolysis appliance and is designed to control and/or regulate a pyrolysis procedure using at least one hydrocarbon content measured by the lambda probe (8; 10).

10. Cooking appliance (1) according to one of the preceding claims, **characterised in that**
- an oxygen content in the cooking chamber (2) can be measured by means of the lambda probe (8) and
- the cooking appliance (1) is designed to detect a correct first-time start-up of the cooking chamber (2) using a drop in the oxygen content.

11. Cooking appliance (1) according to one of the preceding claims, **characterised in that** the cooking appliance (1) is designed to deploy the lambda probe (8) as a temperature sensor when the heater is switched off.

12. Cooking appliance (1) according to one of the preceding claims, **characterised in that**
- the cooking appliance (1) has a soot sensor (11) projecting into the cooking chamber (2) and
- the cooking appliance (1) is designed to use the soot sensor (11) as a fire sensor.

13. Cooking appliance (1) according to one of the preceding claims, **characterised in that** at least one sensor (8, 10, 11) is arranged on a ceiling (3) of the cooking chamber (2) above a top heating element (4).

14. Cooking appliance (1) according to one of the preceding claims, **characterised in that** the cooking appliance (1) is an oven.

15. Method for operating a cooking appliance (1) having a cooking chamber (2) and having at least one lambda probe (8) projecting into the cooking chamber (2) for acquiring at least one property of the cooking chamber (2) by operating the lambda probe (8) in a convention operation below a decomposition voltage of water, wherein
- the lambda probe (8) is operated in an alternating operation consisting of the conventional operation and a decomposition operation,
- wherein it is operated in the decomposition operation at a pump voltage (Up), which is higher than a decomposition voltage of water, so that in this instance water impinging on the lambda probe is decomposed into hydrogen and oxygen,
- a moisture content is determined in the cooking chamber (2) using a difference evaluation of the measurement signal of the lambda probe (8) in the conventional operation and in the decomposition operation of the lambda probe (8).

## Revendications

1. Appareil de cuisson (1), présentant
- au moins une sonde lambda (8) faisant saillie dans un espace de cuisson (2) pour la saisie d'au moins une propriété de l'espace de cuisson (2) via l'exploitation de la sonde lambda (8) dans un fonctionnement conventionnel en-deçà d'une tension de décomposition de l'eau, et
- un dispositif de commande (9) relié à la sonde lambda (8) et exécuté afin de commander et/ou de réguler un fonctionnement de l'appareil de cuisson (1) sur la base de données de mesure de l'au moins une sonde lambda (8), **caractérisé en ce que**
- le dispositif de commande (9) est aménagé afin d'exploiter la sonde lambda (8) en alternance entre un fonctionnement conventionnel et un fonctionnement de décomposition,
- dans lequel la sonde lambda (8) est, en fonctionnement de décomposition, exploitable selon une tension de pompe (Up) supérieure à une tension de décomposition de l'eau, de sorte que de l'eau se trouvant sur la sonde lambda est décomposée en hydrogène et en oxygène,
- et le dispositif de commande (9) est aménagé afin de déterminer une teneur en humidité dans l'espace de cuisson (2) via la prise en compte d'une différence du signal de mesure de la sonde lambda (8) en fonctionnement conventionnel et en fonctionnement de décomposition de la sonde lambda (8).

2. Appareil de cuisson (1) selon la revendication 1, **caractérisé en ce que** l'appareil de cuisson (1) est aménagé afin de réaliser un fonctionnement de cuisson avec une valeur d'humidité de consigne et une teneur en oxygène de consigne.

3. Appareil de cuisson (1) selon la revendication 2, **caractérisé en ce que** l'appareil de cuisson (1) est aménagé afin de régler séparément la teneur en humidité via un apport ciblé d'humidité en présence d'une teneur en oxygène accrue.

4. Appareil de cuisson (1) selon l'une des revendications précédentes, **caractérisé en ce que** la sonde lambda (8) est aménagée sous la forme d'un capteur d'hydrocarbures.

5. Appareil de cuisson (1) selon l'une des revendications 1 à 3, **caractérisé en ce que** l'appareil de cuisson (1) présente en outre un capteur d'hydrocarbures (10) faisant saillie dans l'espace de cuisson (2), lequel capteur est exécuté sous la forme d'une sonde lambda.

6. Appareil de cuisson (1) selon l'une des revendications 4 ou 5, **caractérisé en ce que** la sonde lambda servant de capteur d'hydrocarbures (10) présente des électrodes actives catalytiques pour les hydrocarbures.

7. Appareil de cuisson (1) selon l'une des revendications 4 à 6, **caractérisé en ce que** l'appareil de cuisson (1) est aménagé afin de reconnaître au moyen d'une détection d'hydrocarbures un état de brunissement des aliments à cuire dans l'espace de cuisson (2) et de commander et/ou de réguler un déroulement de cuisson en conséquence.

8. Appareil de cuisson (1) selon l'une des revendications 4 à 7, **caractérisé en ce que** l'appareil de cuisson (1) est aménagé afin de réguler une température de l'espace de cuisson lorsqu'il détecte, lors d'un processus de cuisson, une relation inappropriée pour le processus de cuisson entre une température des aliments à cuire et l'avancement d'un processus extérieur au niveau des aliments à cuire.

9. Appareil de cuisson (1) selon l'une des revendications 4 à 8, **caractérisé en ce que** l'appareil de cuisson (1) est un appareil à pyrolyse et est aménagé afin de commander et/ou de réguler un déroulement pyrolytique au moins au moyen d'une teneur en hydrocarbures mesurée par la sonde lambda (8 ; 10).

10. Appareil de cuisson (1) selon l'une des revendications précédentes, **caractérisé en ce**
- **qu'**une teneur en oxygène dans l'espace de cuisson (2) est mesurable au moyen de la sonde lambda (8) et
- **que** l'appareil de cuisson (1) est aménagé afin de détecter une première mise en service correcte de l'espace de cuisson (2) via un recul de la teneur en oxygène.

11. Appareil de cuisson (1) selon l'une des revendications précédentes, **caractérisé en ce que** l'appareil de cuisson (1) est aménagé afin d'utiliser la sonde lambda (8) comme un capteur de température lorsque l'élément chauffant est éteint.

12. Appareil de cuisson (1) selon l'une des revendications précédentes, **caractérisé en ce que**
- l'appareil de cuisson (1) présente un capteur de suie (11) faisant saillie dans l'espace de cuisson (2) et
- l'appareil de cuisson (1) est aménagé afin d'utiliser le capteur de suie (11) comme capteur d'incendie.

13. Appareil de cuisson (1) selon l'une des revendications précédentes, **caractérisé en ce qu'**au moins un capteur (8, 10, 11) est disposé sur un plafond (3) de l'espace de cuisson (2) au-dessus d'un corps de chauffe pour chaleur supérieure (4).

14. Appareil de cuisson (1) selon l'une des revendications précédentes, **caractérisé en ce que** l'appareil de cuisson (1) est un four.

15. Procédé d'exploitation d'un appareil de cuisson (1) avec un espace de cuisson (2) et avec au moins une sonde lambda (8) faisant saillie dans l'espace de cuisson (2) pour la saisie d'au moins une propriété de l'espace de cuisson (2) via l'exploitation de la sonde lambda (8) dans un fonctionnement conventionnel en-deçà d'une tension de décomposition de l'eau, dans lequel
- la sonde lambda (8) est exploitée en alternance entre le fonctionnement conventionnel et un fonctionnement de décomposition,
- dans lequel la sonde lambda est, en fonctionnement de décomposition, exploitable selon une tension de pompe (Up) supérieure à une tension de décomposition de l'eau, de sorte que de l'eau se trouvant sur la sonde lambda est décomposée en hydrogène et en oxygène,
- une teneur en humidité dans l'espace de cuisson (2) est déterminée via la prise en compte d'une différence du signal de mesure de la sonde lambda (8) en fonctionnement conventionnel et en fonctionnement de décomposition de la sonde lambda (8).
